# EUROPÄISCHE PATENTSCHRIFT

(11) **EP 1 019 219 B1**
(45) Veröffentlichungstag und Bekanntmachung des Hinweises auf die Patenterteilung: **21.08.2002**
(21) Anmeldenummer: 98952637.1
(22) Anmeldetag: 24.09.1998
(51) Int. Cl.: B24B 49/10

(54) **MESSEINRICHTUNG AN EINER MASCHINE ZUM BEARBEITEN VON WERKSTÜCKEN MIT SCHNEIDZÄHNEN, INSBES. VON SÄGEBLÄTTERN**
MEASURING DEVICE ON A MACHINE FOR MACHINING WORKPIECES WITH CUTTING TEETH, ESPECIALLY SAW BLADES
DISPOSITIF DE MESURE SUR UNE MACHINE DESTINEE A L'USINAGE DE PIECES AVEC DES DENTS COUPANTES, NOTAMMENT DES LAMES DE SCIE

(30) Priorität: 01.10.1997 DE 19743528
(43) Veröffentlichungstag der Anmeldung: 19.07.2000
(73) Patentinhaber: VOLLMER WERKE MASCHINENFABRIK GMBH, D-88400 Biberach (DE)
(72) Erfinder: LENARD, Peter, D-88400 Biberach (DE); BAILER, Norbert, D-88433 Schemmerhofen (DE); SCHMUCKER, Rudi, D-88447 Warthausen (DE)
(74) Vertreter: Goetz, Rupert, Dipl.-Ing.
(86) Internationale Anmeldenummer: EP9806079
(87) Internationale Veröffentlichungsnummer: WO99016581

(56) Entgegenhaltungen:
- DE-C- 19 630 057
- US-A- 4 641 007
- US-A- 4 963 710

## Beschreibung

Die Erfindung betrifft ein Verfahren zum Steuern einer zum Bearbeiten von Werkstücken mit Schneidzähnen, insbes. von Sägeblättern, vorgesehenen Maschine mit
- einem Werkzeugschlitten, der numerisch gesteuert längs einer Spindelachse sowie quer dazu verschiebbar ist,
- einer Werkzeugspindel, die am Werkzeugschlitten um die Spindelachse drehbar gelagert und mit einem scheibenförmigen Werkzeug für eine Bearbeitung eines Werkstücks bestückbar ist, und
- einem Werkstückschlitten, der numerisch gesteuert längs einer Werkstückschlittenführung verschiebbar ist und eine Werkstückhalterung trägt, wobei
- die Werkzeugspindel von einem Motor mit regelbarer Drehzahl antreibbar ist und
- das Werkzeug ein elektrisch leitendes Glied eines die Maschine steuernden Stromkreises ist, der über das Werkstück geschlossen wird, wenn dieses vom Werkzeug berührt wird.

Ein solches Verfahren ist aus US-A-4,963,710 bekannt. Dabei wird eine Zustellung des Werkzeugs in bezug auf das Werkstück von Parametern eines zwischen beiden fließenden Stromes abhängig gemacht.

Der Erfindung liegt die Aufgabe zugrunde, ein solches Verfahren derart weiterzubilden, daß mit den an der Maschine ohnehin vorgesehenen numerisch gesteuerten Bewegungsmöglichkeiten (Bewegungsachsen) die für die Erkennung und Bearbeitung von Werkstükken mit Schneidzähnen, insbesondere von Kreissägeblättern, erforderlichen Maße in einer für die numerische Steuerung der Maschine geeigneten Form aufgenommen werden können, ohne daß eine Beschädigung einer abzutastenden Zahnspitze zu befürchten ist.

Die Aufgabe ist erfindungsgemäß ausgehend von einem Verfahren der genannten Gattung dadurch gelöst, daß die Werkzeugspindel zum Abtasten des Werkstücks durch das Werkzeug mit einer Meßdrehzahl angetrieben wird, die gegenüber einer normalerweise zur Bearbeitung des Werkstücks verwendeten Betriebsdrehzahl erheblich vermindert ist. Dabei liegt die Meßdrehzahl vorzugsweise in der Größenordnung zwischen einem und zehn Prozent der Betriebsdrehzahl.

Ein Ausführungsbeispiel der Erfindung wird im folgenden anhand schematischer Zeichnungen mit weiteren Einzelheiten beschrieben. Es zeigen:
- Fig. 1: eine Schrägansicht einer numerisch gesteuerten Maschine zum Schleifen von Sägeblättern,
- Fig. 2: einen vergrößerten Ausschnitt aus Fig. 1, mit leicht geänderter Blickrichtung, in einer Einstellung zum Zahnrückenschleifen,
- Fig. 3: einen weiter vergrößerten Ausschnitt von vorne,
- Fig. 4: eine Draufsicht einer Tasteinrichtung der Maschine,
- Fig. 5 bis 8: aufeinanderfolgende Arbeitsstellungen der Maschine in Teilansichten ähnlich Fig. 3, und
- Fig. 9: eine der Fig. 3 entsprechende Ansicht der Maschine in einer Ausstattung und Einstellung zum Zahnbrustschleifen.

Als Beispiel für ein auf der abgebildeten Maschine zu bearbeitendes Werkstück 10 ist eine Kreissäge mit hartmetallbestückten Schneidzähnen 12 dargestellt, von denen jeder an seiner Zahnbrust 14 und an seinem Zahnrücken 16 zu schleifen ist, während seine Zahnspitze 18 eine vorbestimmte Stellung genau einhält.

Die abgebildete Maschine hat ein Maschinengestell 20, an dem ein langgestreckter Führungskörper 22 um eine im dargestellten Beispiel waagerechte Schwenkachse A schwenkeinstellbar gelagert ist. Die Schwenkachse A ist definiert als Schnittlinie einer senkrechten ersten Bezugsebene B und einer waagerechten zweiten Bezugsebene C. Längs des Führungskörpers 22 erstreckt sich eine Hubachse D, welche die Schwenkachse A unter einem rechten Winkel schneidet und die Bewegungsachse eines hin- und herbeweglichen Hubschlittens 24 darstellt. Längs einer Spindelachse E, welche die Hubachse D rechtwinklig schneidet und sich in der abgebildeten Normalstellung unter einem rechten Winkel zur Schwenkachse A erstreckt, ist am Hubschlitten 24 ein Werkzeugschlitten 26 zustellbar geführt. Der Werkzeugschlitten 26 ist um die Hubachse D aus seiner abgebildeten Normalstellung in beiden Richtungen schrägstellbar. Für den Fall, daß unter den zu bearbeitenden Schneidzähnen 12 solche sind, deren Zahnbrust 14 oder Zahnrücken 16 sich nicht, wie dargestellt, parallel zur Schwenkachse A erstreckt, wird der Werkzeugschlitten 26 entsprechend der Schräge der Zahnbrust 14 bzw. des Zahnrückens 16 um die Hubachse D schräggestellt.

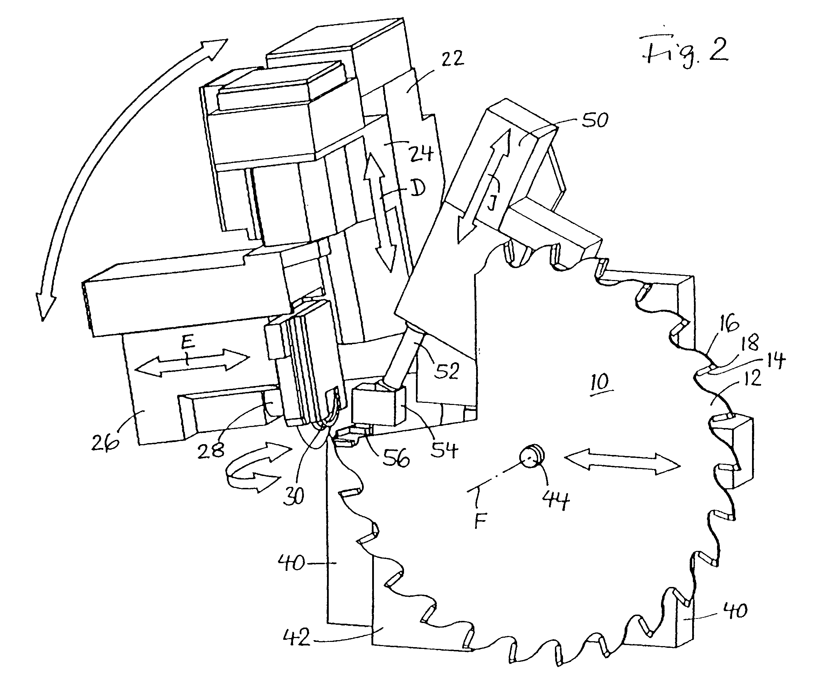

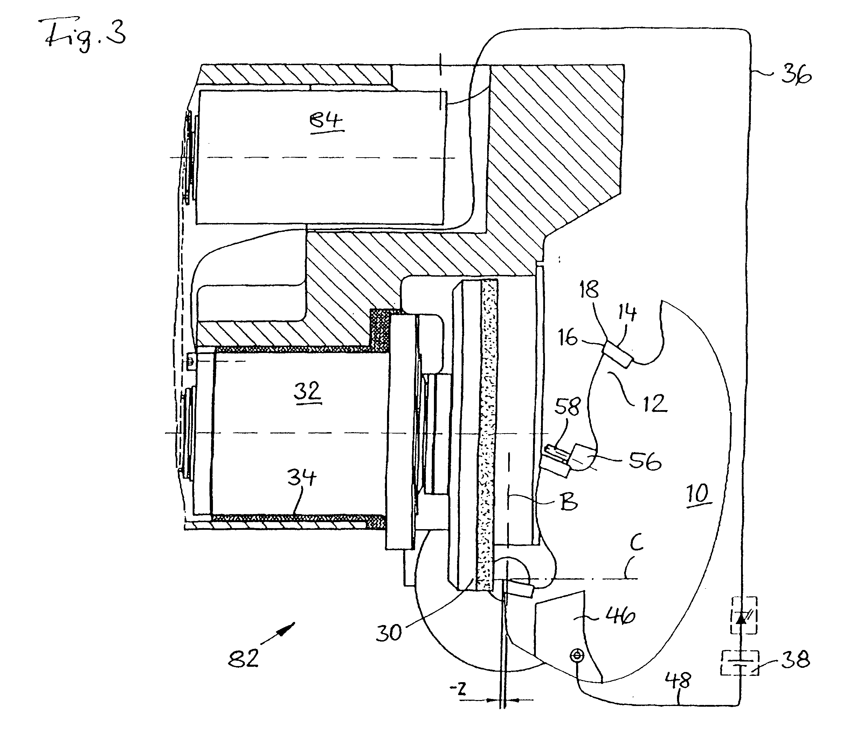

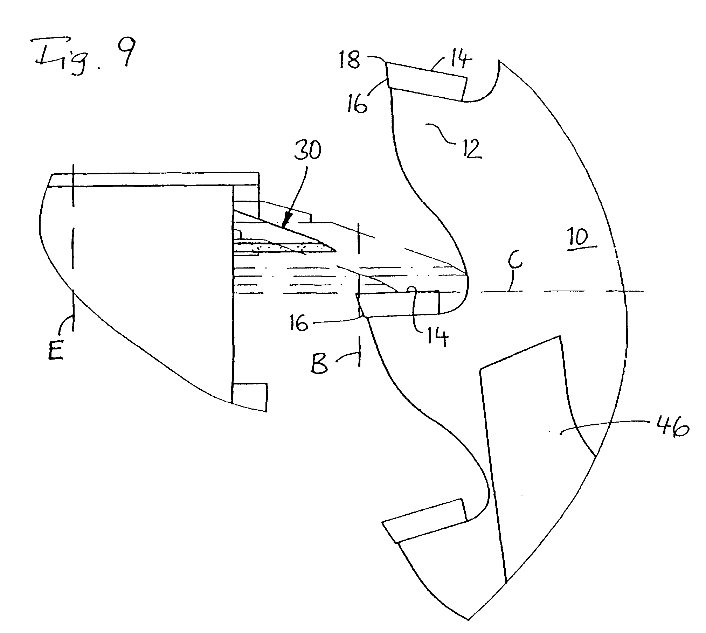

Die Spindelachse E ist die Achse einer am Werkzeugschlitten 26 gelagerten, drehantreibbaren Werkzeugspindel 28, an der sich ein Werkzeug 30 zum Bearbeiten des Werkstücks 10 befestigen läßt. Das Werkzeug 30 ist in Fig.2 als Schleifscheibenkombination bekannter Art dargestellt, bei der eine topfförmige Schleifscheibe und eine tellerförmige Schleifscheibe Rücken an Rücken miteinander verbunden sind. In Fig.3 und 5 bis 8 ist das Werkzeug 30 der Einfachheit halber nur als topfförmige Schleifscheibe dargestellt, in Fig.9 hingegen nur als tellerförmige Schleifscheibe. Anstatt dieser Schleifscheiben oder Schleifscheibenkombination kann als Werkzeug 30 auch eine Erodierscheibe oder eine Kombination zweier Erodierscheiben für elektroerosive Werkstückbearbeitung vorgesehen sein.

Die Werkzeugspindel 28 ist in einem Lagergehäuse 32 gelagert, das mittels einer Isolierhülse 34 elektrisch isoliert am Werkzeugschlitten 26 gehalten und über eine elektrische Leitung 36 mit einer Stromquelle 38 verbunden ist.

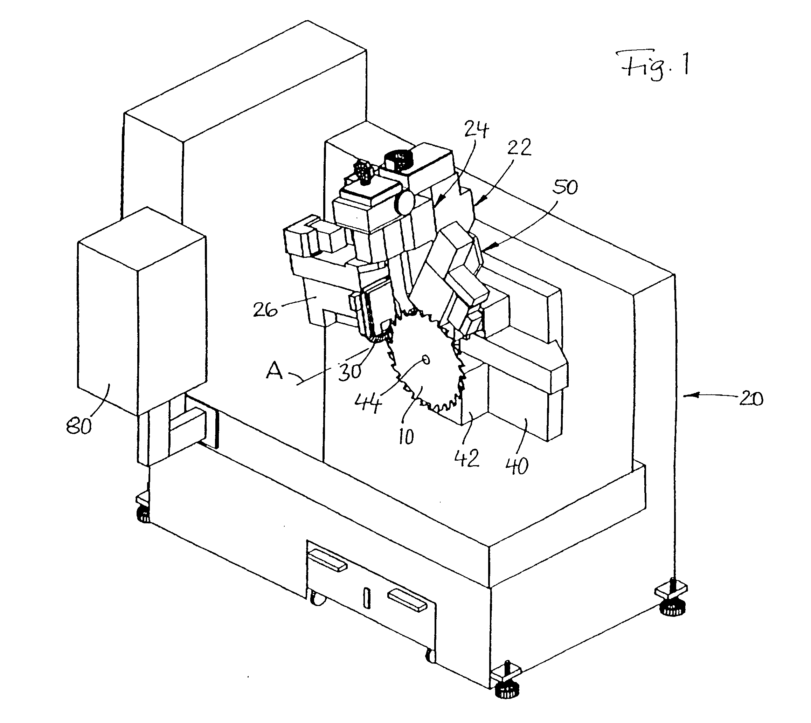

An der Vorderseite des Maschinengestells 20 ist eine im dargestellten Beispiel ortsfeste waagerechte Werkstückschlittenführung 40 angeordnet, die sich unter einem rechten Winkel zur Schwenkachse A erstreckt. Längs der Werkstückschlittenführung 40 ist ein Werkstückschlitten 42 verschiebbar, der eine Werkstückhalterung 44 trägt. Im dargestellten Beispiel mit einem Kreissägeblatt als Werkstück 10 gehört zur Werkstückhalterung 44 ein Dorn, der eine zur Schwenkachse A parallele Drehachse F für das Werkstück 10 definiert; auf diesen Dorn wird das Werkstück 10 zentrisch aufgesteckt. Der Werkstückschlitten 42 soll zum Bearbeiten der Schneidzähne 12 eine Betriebsstellung gemäß Fig.1 bis 3, 8 und 9 einnehmen, bei welcher der um die Drehachse F geschlagene Kreis, auf dem die Zahnspitzen 18 des Werkstücks 10 liegen, die Schwenkachse A schneidet. Somit läßt sich das Werkstück 10 schrittweise in Bearbeitungsstellungen drehen, in denen jeweils eine Zahnspitze 18 auf der Schwenkachse A liegt.

Die zur Drehachse F normale, im dargestellten Beispiel also senkrechte Mittelebene G des Werkstücks 10 ist so angeordnet, daß sie die Hubachse D enthält. In dieser Stellung wird das Werkstück 10 zwischen zwei Klemmbacken 46 einer Klemmeinrichtung eingespannt. Die Zahnspitze 18 des zu bearbeitenden Schneidzahns 12 ist dabei in einem Punkt H angeordnet, in dem die Schwenkachse A die Mittelebene G durchstößt. Die Klemmeinrichtung ist im wesentlichen von üblicher Bauart, hat jedoch die Besonderheit, daß eine der Klemmbacken 46 durch eine elektrische Leitung 48 an die Stromquelle 38 angeschlossen ist, so daß sich ein elektrischer Stromkreis schließt, wenn das Werkstück 10 vom Werkzeug 30 berührt wird.

Für schrittweise stattfindende Vorschubbwegungen, im dargestellten Beispiel Drehbewegungen, des Werkstücks 10 weist die dargestellte Maschine eine Vorschubeinrichtung 50 mit einer Stange 52 auf, die längs einer Vorschubachse I gesteuert ausfahrbar ist und an ihrem Ende einen Vorschubkopf 54 trägt. Am Vorschubkopf 54 ist parallel zur Schwenkachse A ein Querschlitten 56 verschiebbar geführt, der einen Vorschubfinger 58 trägt. Der Querschlitten 56 nimmt normalerweise eine Ruhestellung ein, in welcher der Vorschubfinger 58 abseits der Mittelebene G angeordnet ist; nur wenn eine Vorschubbewegung auszuführen ist, wird der Querschlitten 56 parallel zur Schwenkachse A in eine Stellung bewegt, in welcher der Vorschubfinger 58 in die Zahnlücke vor dem nächsten zu bearbeitenden Schneidzahn 12 eintaucht und sodann durch Ausfahren der Stange 52 gegen die Zahnbrust 14 dieses Schneidzahns drückt und sie in die beschriebene Stellung schiebt, in der die Zahnspitze 18 mit dem Punkt H übereinstimmt.

Im dargestellten Beispiel ist die Vorschubeinrichtung 50 so gesteuert, daß sie diesen Vorgang mit dem nächstfolgenden Schneidzahn 12 wiederholt, so daß erst dieser endgültig in der genannten Stellung stehenbleibt und anschließend bearbeitet wird, nachdem das Werkstück 10 zwischen den Klemmbacken 46 festgeklemmt worden ist. Es ist möglich, daß der Vorschubfinger 58 nicht sofort nach dem Einschalten der Vorschubeinrichtung 50 in eine Zahnlücke des Werkstücks 10 eingreift, weil beim Aufstecken des Werkstücks 10 und beim anschließenden Vorschieben des Werkstückschlittens 42 noch nicht dafür gesorgt ist, daß die Zahnspitze 18 des ersten zu bearbeitenden Schneidzahns 12 schon in der zweiten Bezugsebene C liegt. Um dies jedoch letzten Endes zu gewährleisten, sind die folgenden Maßnahmen vorgesehen:

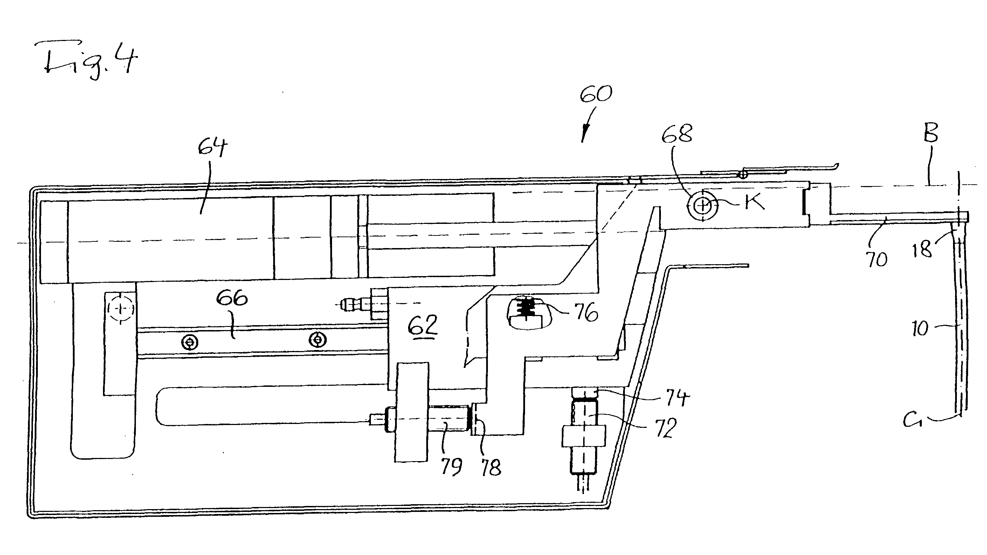

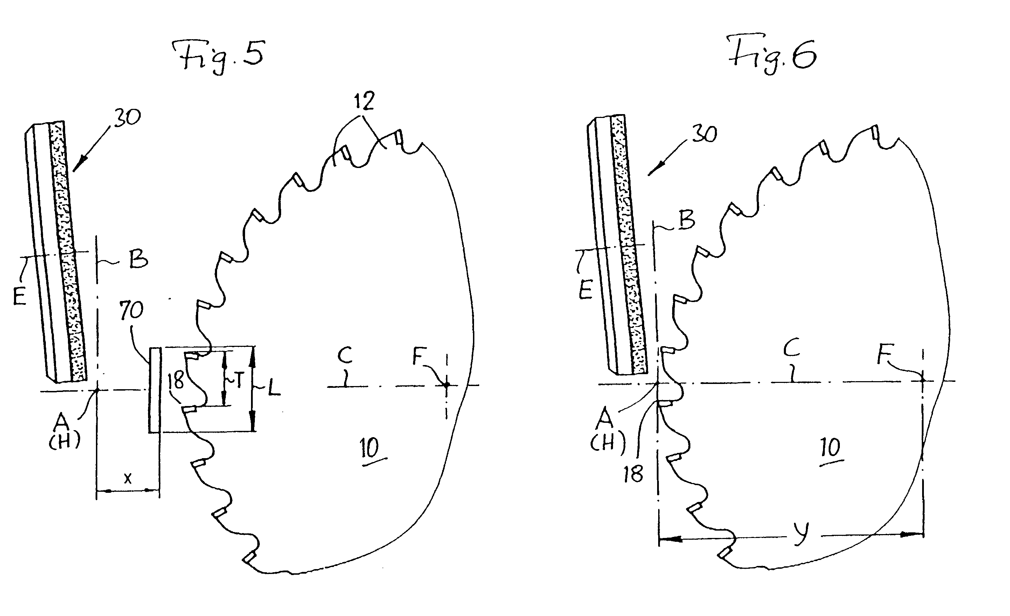

Zu der Maschine gehört die in Fig.4 dargestellte Tasteinrichtung 60 mit einem Tastschlitten 62, der mittels einer hydraulischen oder pneumatischen Kolben-Zylindereinheit 64 längs einer zur Schwenkachse A parallelen Linearführung 66, also normal zur Mittelebene G, zwischen einer Ruhestellung und der in Fig.4 abgebildeten Taststellung hin- und herschiebbar ist. Am Tastschlitten 62 ist mittels eines Gelenks 68 eine Schranke 70 gelagert; das Gelenk 68 definiert eine Drehachse K, die zur Mittelebene G sowie zur ersten Bezugsebene B parallel, und somit im dargestellten Beispiel senkrecht ist. Die Schranke 70 erstreckt sich parallel zur ersten Bezugsebene B, ist dieser in einem Abstand X vorgelagert und hat, in der Mittelebene G gemessen, eine Länge L, die größer ist als die größte vorkommende Zahnteilung T der zu bearbeitenden Werkstücke 10. Diese in Fig.5 dargestellten Verhältnisse bieten Gewähr dafür, daß die Vorwärtsbewegung des Werkstückschlittens 42 mit einem auf seine Werkstückhalterung 44 aufgesteckten Werkstück 10 unterbrochen wird, wenn die am weitesten nach vorne weisende Zahnspitze 18 den Abstand X von der zweiten Bezugseben C hat.

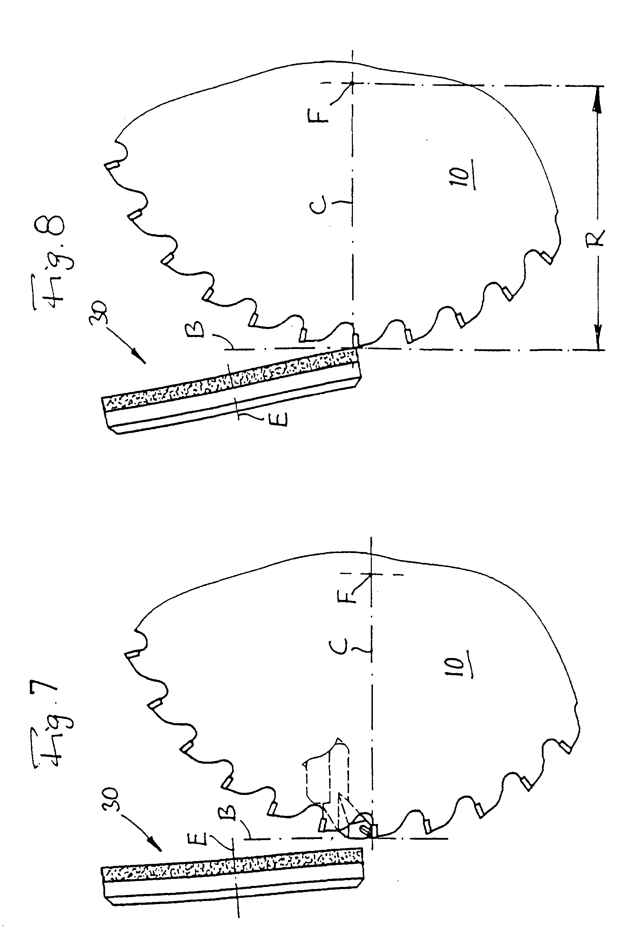

Der Tastschlitten 62 trägt einen Schalter 72, im dargestellten Beispiel einen elektroinduktiven Endschalter, dem ein ortsfester Anschlag 74 zugeordnet ist. Der Werkstückschlitten 42 ist ebenso wie der Hubschlitten 24 und der Werkzeugschlitten 26 numerisch gesteuert und läßt sich nach dem Aufstecken eines zu bearbeitenden Werkstücks 10 auf die Werkstückhalterung 44 erst dann in Gang setzen, wenn der Schalter 72 gemeldet hat, daß der Tastschlitten 62 ausgefahren ist, die Schranke 70 also ihre in Fig.4 abgebildete Taststellung erreicht hat. Die Schranke 70 ist von einer Feder 76 normalerweise in ihrer abgebildeten, zur ersten Bezugsebene B parallelen Lage gehalten, wird aber durch Anstoßen einer Zahnspitze 18 um die Drehachse K geschwenkt und bewegt dabei einen mit ihr verbundenen Schaltkontakt 78, der einen Näherungsschalter 79 betätigt. Dieser gibt ein Signal an die numerische Steuerung 80 der Maschine ab. Dadurch wird die Vorwärtsbewegung des Werkstückschlittens 42 unterbrochen, und dann wird die Kolben-Zylindereinheit 64 betätigt, so daß der Tastschlitten 62 samt Schranke 70 in die Ruhestellung der Tasteinrichtung 60 zurückgezogen wird. Nun ist der Weg für das Werkstück 10 frei und der Werkstückschlitten 42 wird um die Strecke X weiterbewegt, so daß die Zahnspitze 18, die gegen die Schranke 70 gestoßen war, gemäß Fig.6 in die erste Bezugsebene B gelangt, wobei sie, vom Zufall abhängig, mehr oder weniger weit ober- oder unterhalb der zweiten Bezugsebene C, also noch nicht im Schnittpunkt H, angeordnet ist.

Nun wird die Vorschubeinrichtung 50 in der beschriebenen Weise betätigt und damit letzten Endes erreicht, daß eine Zahnspitze 18 in der zweiten Bezugsebene C liegt. Infolge der Kreisbogenform der von dieser Zahnspitze 18 soeben ausgeführten Bewegung ist die Zahnspitze 18 jedoch nicht in der ersten Bezugsebene B geblieben sondern hat diese um einen zwar geringen, für die Bearbeitung jedoch nicht tolerierbaren Betrag - Z (minus Z) überschritten, der durch erneutes Abtasten der Zahnspitze 18 festzustellen und zu korrigieren ist.

Für dieses erneute Abtasten wird das drehantreibbare Werkzeug 30, im dargestellten Beipiel also die topf- bzw. tellerförmige Schleifscheibe verwendet. Das Werkzeug 30 ist elektrisch leitend und somit in der Lage, über die elektrischen Leitungen 36 und 48 sowie die Stromquelle 38 einen Stromkreis zu schließen. Um eine Beschädigung der abzutastenden Zahnspitze 18 zu vermeiden, wird das Werkzeug 30 zum Abtasten nicht mit seiner normalen Betriebsdrehzahl angetrieben, die beim Schleifen üblicherweise in der Größenordnung von 3000 bis 5000 U/min liegt, sondern mit einer Drehzahl von beispielsweise 50 bis 300 U/min, also in der Größenordnung zwischen 1% und 10% der Betriebsdrehzahl. Zu diesem Zweck wird das Werkzeug 30 von einem Elektromotor 84 angetrieben, der in bekannter Weise über einen Frequenzwandler gespeist wird. Die geringe zum Abtasten vorgesehene Drehzahl genügt, um Schneidemulsion, Verschmutzungen und dgl. vom Werkzeug 30 abzuschleudern und sorgt ferner dafür, daß geringfügige Taumelbewegungen und Ausbröckelungen des Werkzeugs 30 ohne Einfluß auf die Abtastgenauigkeit bleiben.

Das Werkzeug 30 wird also mittels des Werkzeugschlittens 26 soweit zugestellt, bis das Werkzeug die ihm zugewandte Zahnspitze 18 leicht berührt und infolgedessen über das Werkstück 10 den von der Stromquelle 38 gespeisten Stromkreis schließt. Dadurch wird ein Signal ausgelöst, das die Steuerung 80 veranlaßt, die vom Werkstückschlitten 42 eingenommene Stellung mit derjenigen zu vergleichen, die der Werkstückschlitten beim Anstoßen des Werkstücks 10 an die Schranke 70 eingenommen hatte, woraus ein das Werkstück 10 kennzeichnender Näherungswert Y, bei einem Kreissägeblatt also dessen ungefährer Radius, errechnet worden ist. Wird nun beim erneuten Abtasten des Werkstücks 10 festgestellt, daß dessen in der zweiten Bezugsebene C liegende Zahnspitze 18 um den Betrag Z über die erste Bezugsebene B hinausragt, so wird der Werkstückschlitten 42 um den Betrag Z zurückgefahren mit der Folge, daß die Zahnspitze 18 nun auf der Schwenkachse A liegt. Der genaue Radius R des Werkstücks 10 ergibt sich aus der Gleichung R = Y + Z.

Falls das Werkstück 10 Vor- und Nachschneidezähne von unterschiedlicher Höhe aufweist, wird der beschriebene Meßvorgang wiederholt, so daß für beide Zahnarten je ein maßgebender Radius bzw. Durchmesser des Werkstücks 10 festgestellt wird.

Das Prinzip, ein elektrisch leitendes Werkstück 10 mittels eines ebenfalls elektrisch leitenden Werkzeugs 30 abzutasten, läßt sich für verschiedenartige Messungen nutzen. Beispielsweise kann gemäß Fig.9 eine als Werkzeug 30 vorgesehene tellerförmige Schleifscheibe bei einer numerisch gesteuerten Bewegung des Hubschlittens 24 die Zahnlückentiefe des Werkstücks 10 abtasten und kann ferner durch Zustellen des Werkzeugschlittens 26 die Lage der Zahnbrust 14 kontrollieren.

Falls zu befürchten ist, daß Ungenauigkeiten in der Positionierung des Werkstücks 10 dadurch entstehen, daß der Werkstückschlitten 42 in der beschriebenen Weise hin- und herbewegt wird, kann die Strecke X kleiner als dargestellt bemessen werden. Dies hat zur Folge, daß die gemäß Fig.5 und 6 vorderste Zahnspitze 18 bei der beschriebenen Bewegung des Werkstückschlittens 42 um die Strecke X die erste Bezugsebene B noch nicht erreicht, und daß auch nach der Vorschubbewegung des Werkstücks 10, bei der diese Zahnspitze 18 in die zweite Bezugsebene C gelangt, noch eine Strecke + Z zurückzulegen bleibt, damit die Zahnspitze 18 schließlich auch die erste Bezugsebene B erreicht und somit auf der Schwenkachse A liegt. Der Betrag + Z läßt sich in entsprechender Weise wie der Betrag - Z (Fig.3) durch Abtasten mit dem Werkzeug 30 in seiner Eigenschaft als Bestandteil einer Meß- und Korrektureinrichtung 82 ermitteln und korrigieren.

## Patentansprüche

1. Verfahren zum Steuern einer zum Bearbeiten von Werkstücken (10) mit Schneidzähnen (12), insbes. von Sägeblättern, vorgesehenen Maschine mit
- einem Werkzeugschlitten (26), der numerisch gesteuert längs einer Spindelachse (E) sowie quer dazu verschiebbar ist,.
- einer Werkzeugspindel (28), die am Werkzeugschlitten (26) um die Spindelachse (E) drehbar gelagert und mit einem scheibenförmigen Werkzeug (30) für eine Bearbeitung eines Werkstücks (10) bestückbar ist, und
- einem Werkstückschlitten (42), der numerisch gesteuert längs einer Werkstückschlittenführung (40) verschiebbar ist und eine Werkstückhalterung (44) trägt, wobei
- die Werkzeugspindel (28) von einem Motor (84) mit regelbarer Drehzahl antreibbar ist und
- das Werkzeug (30) ein elektrisch leitendes Glied eines die Maschine steuernden Stromkreises (30, 36, 46, 48, 10) ist, der über das Werkstück (10) geschlossen wird, wenn dieses vom Werkzeug (30) berührt wird,
**dadurch gekennzeichnet, daß** die Werkzeugspindel (28) zum Abtasten des Werkstücks (10) durch das Werkzeug (30) mit einer Meßdrehzahl angetrieben wird, die gegenüber einer normalerweise zur Bearbeitung des Werkstücks (10) verwendeten Betriebsdrehzahl erheblich vermindert ist.

2. Verfahren nach Anspruch 1,
**dadurch gekennzeichnet, daß** die Meßdrehzahl in der Größenordnung zwischen einem und zehn Prozent der Betriebsdrehzahl liegt.

## Claims

1. A method of controlling a machine provided for machining workpieces (10) having cutting teeth (12), especially saw blades, comprising
- a tool slide (26) which is displaceable along a spindle axis (E) as well as transversely thereof under numerical control,
- a tool spindle (28) which is supported on the saddle (26) so as to be rotatable about the spindle axis (E) and adapted to be equipped with a disk-shaped tool (30) for machining a workpiece (10), and
- a workpiece slide (42) which is displaceable along a workpiece slide guide means (40) under numerical control and carries a workpiece support (44),
- the tool spindle (28) being adapted to be driven by a motor (84) at variable rotational speed, and
- the tool (30) being an electrically conductive member of an electric circuit (30, 36, 46, 48, 10) which controls the machine and is closed through the workpiece (10) when the latter is touched by the tool (30),
**characterised in that** for sensing the workpiece (10) by the tool (30) the tool spindle (28) is driven at a rotational measuring speed which is reduced considerably as compared to a rotational operating speed normally used for machining the workpiece (10).

2. The method according to claim 1,
**characterised in that** the rotational measuring speed lies in the order of magnitude between one and ten percent of the rotational operating speed.

## Revendications

1. Procédé de commande d'une machine destinée à l'usinage de pièces à oeuvrer (10) à dents coupantes (12), en particulier de lames de scie, comportant
- un chariot porte-outil (26) mobile le long d'un axe de broche (E) et perpendiculairement à celui-ci sous une commande numérique,
- une broche porte-outil (28) montée mobile en rotation autour de l'axe de broche (E) sur le chariot porte-outil (26) et susceptible d'être équipée d'un outil (30) en forme de disque pour un usinage d'une pièce à oeuvrer (10), et
- un chariot porte-pièce (42) mobile le long d'un guidage de chariot porte-pièce (40) sous commande numérique et portant une monture porte-pièce (44),
dans lequel :
- la broche porte-outil (28) peut être entraînée par un moteur (84) à vitesse de rotation réglable, et
- l'outil (30) est un organe conducteur d'électricité d'un circuit électrique (30, 36, 46, 48, 10) commandant la machine, qui est fermé via la pièce à oeuvrer (10) lorsque celle-ci est touchée par l'outil (30),
**caractérisé en ce que** la broche porte-outil (28) est entraînée à une vitesse de rotation de mesure pour le palpage de la pièce à oeuvrer (10) par l'outil (30), qui est considérablement réduite par rapport à une vitesse de rotation de fonctionnement utilisée normalement pour l'usinage de la pièce à oeuvrer (10).

2. Procédé selon la revendication 1, **caractérisé en ce que** la vitesse de rotation de mesure est de l'ordre de grandeur entre un et dix pour-cent de la vitesse de rotation de fonctionnement.
